(19) Europäisches Patentamt
European Patent Office
Office européen des brevets

(11) Veröffentlichungsnummer: **0 207 414 B1**

(12) # EUROPÄISCHE PATENTSCHRIFT

(45) Veröffentlichungstag der Patentschrift: **11.11.92**

(51) Int. Cl.[5]: **C08G 18/50**, C08G 18/08, C08G 18/78, C08G 18/38, //C09D175/08,D21H17/57

(21) Anmeldenummer: **86108516.5**

(22) Anmeldetag: **23.06.86**

(54) **Wässrige Lösungen oder Dispersionen von Polyisocyanat-Additionsprodukten, ein Verfahren zu ihrer Herstellung, sowie ihre Verwendung als Beschichtungsmittel oder als Leimungsmittel für Papier.**

(30) Priorität: **04.07.85 DE 3523856**

(43) Veröffentlichungstag der Anmeldung:
**07.01.87 Patentblatt 87/02**

(45) Bekanntmachung des Hinweises auf die Patenterteilung:
**11.11.92 Patentblatt 92/46**

(84) Benannte Vertragsstaaten:
**AT BE CH DE FR GB IT LI NL SE**

(56) Entgegenhaltungen:
**EP-A- 182 069**
**DE-A- 2 400 490**
**FR-A- 2 280 664**
**US-A- 4 321 172**
**EP-A- 0 000 347**
**DE-A- 3 438 563**
**FR-A- 2 385 756**

(73) Patentinhaber: **BAYER AG**
**W-5090 Leverkusen 1 Bayerwerk(DE)**

(72) Erfinder: **Henning, Wolfgang, Dr.**
**Zur Linde 27**
**W-5067 Kürten(DE)**
Erfinder: **Meckel, Walter, Dr.**
**Zonser Strasse 9**
**W-4040 Neuss(DE)**
Erfinder: **Beck, Ulrich, Dr.**
**Weiher Strasse 17**
**W-5303 Bornheim 3(DE)**
Erfinder: **Bäumgen, Heinz**
**Buchenweg 10**
**W-5090 Leverkusen(DE)**
Erfinder: **König, Joachim, Dr.**
**Auf dem Broich 25**
**W-5068 Odenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft neue Lösungen oder Dispersionen von, eingebaute Acylharnstoffgruppen aufweisenden kationisch und gegebenenfalls nicht-ionisch-hydrophil modifizierten Polyisocyanat-Additionsprodukten, ein Verfahren zu ihrer Herstellung, sowie ihre Verwendung als Beschichtungsmittel für flexible oder nicht-flexible Substrate bzw. als Leimungsmittel für Papier.

Verfahren zur Herstellung von ionisch modifizierten Polyurethanen sind bekannt und werden beispielsweise in folgenden Literaturstellen beschrieben:
DE-PS 880 485, DE-AS 1 044 404, US-PS 3 036 998,
DE-PS 1 178 586, DE-PS 1 184 946, DE-AS 1 237 306,
DE-AS 1 495 745, DE-OS 1 595 602, DE-OS 1 770 068,
DE-OS 2 019 324, DE-OS 2 035 732, DE-OS 2 446 440,
DE-OS 2 345 256, DE-OS 2 345 245, DE-OS 2 427 274,
US-PS 3 479 310 und Angewandte Chemie 82, 53 (1970)
und Angew. Makromol. Chem. 26, 85 ff (1972).

Die wäßrigen Dispersionen der genannten Polyurethane können in einem weiten Bereich von Anwendungen eingesetzt werden wie z.B. als Klebstoffe oder Beschichtung verschiedener flexibler oder nicht-flexibler Substrate.

Trotz der Viclzahl der bekannten Verfahren und der daraus gewonnenen Produkte besteht doch immer wieder der Wunsch nach wäßrigen Dispersionen mit ganz bestimmten Eigenschaften.

Mit dem nachfolgend näher beschriebenen Verfahren wird eine Möglichkeit aufgezeigt, auf einfache Weise durch Wahl eines über eine Acylharnstoffgruppe gebundenen organischen Substituenten das Eigenschaftsbild der Produkte in einem weiten Rahmen gezielt zu verändern.

Die Herstellung von Acylharnstoffgruppen aufweisenden Isocyanatpolyadditionsprodukten ist an sich bekannt und wurde beispielsweise in DE-OS 2 436 740 oder DE-OS 2 714 293 beschrieben. Gemäß diesen bekannten Verfahren werden die Produkte entweder in gelöster Form hergestellt und unter Filmbildung in Beschichtungen, Lacküberzüge oder Folien überführt (DE-OS 2 436 740), oder man stellt zunächst Acylharnstoffgruppen aufweisende Polyhydroxylverbindungen her, die dann in Acylharnstoffgruppen aufweisende Schaumstoffe überführt werden können (DE-OS 2 714 293). Es war dennoch nicht vorhersehbar, daß dieses Prinzip auch auf die Chemie der wäßrigen Polyurethandispersionen übertragbar ist, und insbesondere, daß die nachstehend näher beschriebenen, erfindungsgemäßen Dispersionen von Polyurethanen mit über Acylharnstoffgruppen gebundenen hydrophoben Seitenketten bezüglich ihrer Eignung als Papierleimungsmittel beispielsweise den an sich guten Produkten der DE-OS 2 400 490 zumindest ebenbürtig sein würden. Insbesondere die nachstehend näherbeschriebenen Dispersionen oder Lösungen von kationischen Gruppen und hydrophobe Seitenketten aufweisenden Polyurethanen sind den Papierleimungsmitteln der zuletzt genannten Vorveröffentlichung wegen ihrer verbesserten Leimungswirkung sowohl für alaunfreie als auch für alaunhaltige oder vorgeleimte oder holzhaltige Papiere überlegen.

Gegenstand der Erfindung sind wäßrige Lösungen oder Dispersionen von Polyisocyanat-Additionsprodukten, die einen ihre Löslichkeit oder Dispergierbarkeit in Wasser gewährleistenden Gehalt an eingebauten ternären oder quaternären Ammoniumgruppen, sowie gegebenenfalls an eingebauten, innerhalb einer Polyetherkette vorliegenden Ethylenoxideinheiten $-CH_2-CH_2-O-$ aufweisen, wobei der Gehalt an ternären oder quaternären Ammoniumgruppen bei 2 bis 300 Milliäquivalenten pro 100 g Feststoff und der Gehalt an den genannten Ethylenoxideinheiten bei 0 bis 25 Gew.-%, bezogen auf Feststoff liegt, dadurch gekennzeichnet, daß die Polyisocyanat-Additionsprodukte innerhalb der Polymerkette eingebaute Segmente der allgemeinen Formel

$$-NH-CO-\underset{|}{N}-CO-R$$

aufweisen, wobei

R einen gesättigten oder ungesättigten aliphatischen Kohlenwasserstoffrest mit bis zu 35 Kohlenstoffatomen, vorzugsweise mit 9 bis 22 Kohlenstoffatomen, einen aromatischen Kohlenwasserstoffrest mit 6 bis 10 Kohlenstoffatomen oder einen araliphatischen Kohlenwasserstoffrest mit 7 bis 10 Kohlenstoffatomen bedeutet, oder

R Chlormethyl, Cyclohexyl, para-N,N-Dimethylphenyl, eine Carbonsäureestergruppe, eine Carbonsäureamidgruppe, eine Methylencarbonsäureestergruppe, eine Methylencarbonsäureamidgruppe,

eine Ethylencarbonsäureestergruppe, eine Ethylencarbonsäureamidgruppe, eine cis- oder trans-Vinylidencarbonsäureestergruppe, eine cis- oder trans-Vinylidencarbonsäureamidgruppe, eine ortho-Benzoesäureestergruppe, eine ortho-Benzoesäureamidgruppe oder einen Rest der Formel

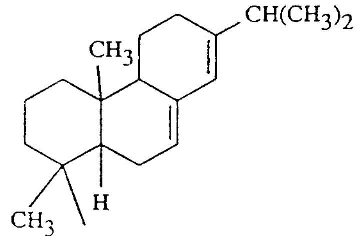

bedeutet,
wobei die oben genannten Ester- und Amidgruppen von einwertigen Alkoholen bzw. Aminen abgeleitet sind,
oder wobei, bei Vorliegen von mehreren Resten R im gleichen Molekül gleichzeitig unterschiedliche, der genannten Definition entsprechende, Reste R vorliegen können,
wobei die Gesamtmenge der eingebauten Struktureinheiten der genannten Formel einem Gehalt des Polyisocyanat-Additionsprodukts an acylierten Harnstoffgruppen der Formel

$$-NH-CO-\underset{|}{N}-CO-$$

von 0,1 bis 20 Gew.-%, bezogen auf Feststoff, entspricht.

Gegenstand der Erfindung ist auch ein Verfahren zur Herstellung dieser Lösungen oder Dispersionen durch Umsetzung von
a) organischen Polyisocyanaten, gegebenenfalls unter Mitverwendung von organischen Monoisocyanaten mit
b) gegenüber Isocyanatgruppen reaktionsfähige Gruppen aufweisenden Verbindungen gegebenenfalls unter Mitverwendung bzw. in Anwesenheit von
c) weiteren Hilfs- und Zusatzmitteln,
wobei als Aufbaukomponenten b) ternäre oder quaternäre Ammoniumgruppen oder in derartige Gruppen überführbare Gruppen aufweisende Aufbaukomponenten mitverwendet werden, wobei die zumindest teilweise Überführung der in Salzgruppen der genannten Art überführbaren Gruppen während oder anschließend an die Polyadditionsreaktion erfolgt, und gegebenenfalls unter Mitverwendung von Aufbaukomponenten a) und/oder b), welche innerhalb einer Polyetherkette vorliegende Ethylenoxideinheiten aufweisen, wobei aie Gesamtmenge derartiger hydrophiler Aufbaukomponenten so bemessen wird, daß in dem Polyisocyanat-Polyadditionsprodukt eine die Löslichkeit oder Dispergierbarkeit in Wasser gewährleistende Menge an ternären oder quaternären Ammoniumgruppen von 2 bis 300 Milliäquivalenten pro 100 g Feststoff und gegebenenfalls an Ethylenoxideinheiten der genannten Art von 0 bis 25 Gew.-% vorliegt, und Überführung des so hergestellten Polyisocyanatadditionsprodukts in eine wäßrige Lösung oder Dispersion während oder im Anschluß an die Additionsreaktion, dadurch gekennzeichnet, daß man als Aufbaukomponenten a) und/oder b) zumindest anteilig Acylharnstoffgruppen der Formel

$$-NH-CO-\underset{|}{N}-CO-R$$

aufweisende Aufbaukomponenten (mit)verwendet, deren Menge so bemessen wird, daß in dem PolyisocyanatAdditionsprodukt von 0,1 bis 20 Gew.-%, bezogen auf Feststoff, an, Teil der genannten Acylharnstoffgruppen bildenden Struktureinheiten der Formel

-NH-CO-N-CO-
|

vorliegen.

Gegenstand der Erfindung ist schließlich auch die Verwendung der erfindungsgemäßen Lösungen oder Dispersionen als Beschichtungsmittel für flexible oder nicht-flexible Substrate, sowie als Leimungsmittel für Papier, bzw. zur Herstellung von Leimungsmitteln für Papier.

Bei der Herstellung der erfindungsgemäßen Dispersionen kommen a) organische Polyisocyanate, gegebenenfalls unter Mitverwendung von monofunktionellen Isocyanaten, b) Verbindungen mit mindestens zwei gegenüber Isocyanatgruppen reaktionsfähigen Gruppen, gegebenenfalls unter Mitverwendung von entsprechenden monofunktionellen Verbindungen und gegebenenfalls c) weitere Hilfs- und Zusatzmittel zum Einsatz.

Geeignete Aufbaukomponenten a) sind beispielsweise

a1) Diisocyanate der Formel $Q(NCO)_2$, wobei Q einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 1-Isocyanato-3,3,5-trimethyl-5-isocyamatomethylcyclohexan, 4,4'-Diisocyanatodicyclohexylmethan, 4,4'-Diisocyanato-dicyclohexylpropan-(2,2), 1,4-Diisocyanatobenzol, 2,4-Diisocyanato-toluol, 2,6-Diisocyanatotoluol, 4,4'-Diisocyanatodiphenyl-methan, 4,4'-Diisocyanatodiphenylpropan-(2,2), p-Xylylen-diisocyanat oder $\alpha$, $\alpha$, $\alpha'$, $\alpha'$-Tetramethyl-m- oder p-xylylendiisocyanat, sowie aus diesen Verbindungen bestehende Gemische.

Zu den erfindungsgemäß geeigneten Aufbaukomponenten a) gehören auch beispielsweise

a2) die aus der Polyurethanchemie an sich bekannten, NCO-Gruppen aufweisenden Prepolymere, wie sie durch Umsetzung von einfachen Diisocyanaten der unter a1) beispielhaft genannten Art mit organischen Polyhydroxylverbindungen der nachstehend unter b1) beispielhaft genannten Art unter Einhaltung eines NCO/OH-Äquivalentverhältnisses von beispielsweise 1,2:1 bis 10:1, vorzugsweise 1,5:1 bis 2,5:1 erhalten werden können. Aus dem genannten Äquivalentverhältnis ist ersichtlich, daß unter "NCO-Prepolymeren" im Rahmen der Erfindung auch die sogenannten "Semiprepolymeren" zu verstehen sind, d.h. Gemische von überschüssigen, nicht umgesetzten Diisocyanaten mit echten NCO-Prepolymeren.

Zu den erfindungsgemäß geeigneten Aufbaukomponenten a) gehören außerdem beispielsweise

a3) Acylharnstoffgruppen der allgemeinen Formel

-NH-CO-N-CO-R
|

aufweisende Polyisocyanate. In dieser Formel hat R die bereits obengenannte Bedeutung.

Es ist grundsätzlich möglich, als Komponente a3) Polyisocyanate einzusetzen, die mehrere derartige Acylharnstoffgruppen aufweisen, wobei die einzelnen der Reste R der genannten Definition entsprechen, jedoch voneinander verschieden sein können.

Bei den Acylharnstoffgruppen aufweisenden Polyisocyanaten a3) kann es sich sowohl um vergleichsweise niedermolekulare als auch um höhermolekulare NCO-Prepolymere handeln. Die Herstellung der Aufbaukomponenten a3) erfolgt in Analogie zur Lehre der DE-OS 2 436 741 durch partielle Carbodiimidisierung der Isocyanatgruppen von organischen Polyisocyanaten der oben unter a1) und a2) beispielhaft genannten Art und Anlagerung von organischen Carbonsäuren R-COOH an die so hergestellten, Carbodiimid-modifizierten Polyisocyanate. Typische Beispiele geeigneter Aufbaukomponenten a3) sind beispielsweise Diisocyanate der allgemeinen Formel

$OCN-(R^1-NH-CO-N)_m-R^1-NCO$
with C=O on the N, and R on the C:

die in der Weise hergestellt werden, daß man in einer ersten Stufe Carbodiimidgruppen von Diisocyanatocarbodiimiden der allgemeinen Formel

$OCN-(R^1-N=C=N)_m-R^1-NCO$

vollständig oder teilweise mit Carbonsäuren der allgemeinen Formel

R-COOH

gegebenenfalls in Gegenwart eines geeigneten Lösungsmittels bei Temperaturen von 25 bis 100°C reagieren läßt.

In diesen Formeln stehen

R für einen Rest der bereits oben bei der Definition von R genannten Art,

$R^1$ für einen zweiwertigen, gegebenenfalls Urethan-, Ester- und/oder Ethergruppen aufweisenden Kohlenwasserstoffrest wie er durch Entfernung der endständigen Isocyanatgruppen aus einem einfachen organischen Diisocyanat oder einem Urethangruppen und gegebenenfalls Ether- oder Estergruppen aufweisenden NCO-Prepolymer erhalten wird, wobei bei Vorliegen von mehreren Resten $R^1$ im gleichen Molekül gleichzeitig auch unterschiedliche, der genannten Definition entsprechende Reste $R^1$ vorliegen können, und

m für eine ganze oder (im statistischen Mittel) gebrochene Zahl von 1 bis 10, vorzugsweise von 1 bis 4.

Die Herstellung der Diisocyanatocarbodiimide ist an sich bekannt und wird z.B. in den US-Patentschriften 2 840 589 und 2 941 966 sowie von P.W. Campbell und K.C. Smeltz in Journal of Organic Chemistry, 28, 2069 (1963) beschrieben. Besonders schonend und frei von Nebenprodukten lassen sich Diisocyanatocarbodiimide auch durch eine Heterogenkatalyse gemäß den deutschen Offenlegungsschriften 2 504 400 und 2 552 350 herstellen. Die Carbodiimidisierung von Diisocyanaten in Gegenwart sehr geringer Mengen an Phospholinoxid unter anschließender Blockierung des Katalysators mit Säurechloriden wird in der DE-OS 2 653 120 beschrieben.

Als Aufbaukomponente für die Carbodiimidgruppen aufweisenden Diisocyanate werden bevorzugt aromatische Diisocyanate der oben unter a1) beispielhaft genannten Art eingesetzt.

Geeignete Carbonsäuren der Formel R-COOH sind beispielsweise Essigsäure, Propionsäure, Hexancarbonsäure, Laurinsäure, Palmitinsäure, Stearinsäure, Benzoesäure, Phenylessigsäure, Acrylsäure, Methacrylsäure, Crotonsäure, 10-Undecensäure, Ölsäure oder Linolsäure. Grundsätzlich wäre es auch möglich, beim erfindungsgemäßen Verfahren andere Monocarbonsäuren einzusetzen, die nicht der oben gemachten Definition von R entsprechen wie z.B. Chloressigsäure, Cyclohexancarbonsäure, Abietinsäure, 4-Dimethylaminobenzoesäure oder auch Monoester oder Monoamide von Dicarbonsäuren wie Oxalsäure, Malonsäure, Bernsteinsäure, Maleinsäure, Fumarsäure oder Phthalsäure mit einwertigen Alkoholen oder Aminen. Die Verwendung derartiger spezieller Monocarbonsäuren ist lediglich aus preislichen Gründen weniger bevorzugt. Sie würde jedoch eine glatt äquivalente Ausführungsform des beanspruchten erfindungsgemäßen Verfahrens darstellen. Grundsätzlich können beim erfindungsgemäßen Verfahren auch beliebige Gemische der beispielhaft genannten Säuren der allgemeinen Formel R-COOH eingesetzt werden. Die Menge der eingesetzten Säure wird so bemessen, daß pro Mol Carbodiimidgruppen 0,2 bis 1,2, vorzugsweise 0,5 bis 1,2 Mol an Carboxylgruppen im Reaktionsgemisch vorliegen.

Die Herstellung der ebenfalls als Aufbaukomponente a3) geeigneten, Acylharnstoffgruppen aufweisenden NCO-Prepolymeren kann beispielsweise entweder durch Umsetzung der bereits genannten, Acylharnstoffgruppen aufweisenden Polyisocyanate auf Basis niedermolekularer Diisocyanate mit unterschüssigen Mengen an Polyhydroxylverbindungen der nachstehend unter b1) und/oder b2) beispielhaft genannten Art oder durch partielle Carbodiimidisierung von NCO-Prepolymeren der oben unter a2) beispielhaft genannten Art und anschließender Umsetzung der Carbodiimidisierungsprodukte mit Carbonsäuren R-COOH in Analogie zu den obengemachen Ausführungen erfolgen.

Weitere mögliche Aufbaukomponenten a) für das erfindungsgemäße Verfahren sind auch beispielsweise a4) hydrophil modifizierte Polyisocyanate, beispielsweise seitenständige Polyetherketten mit eingebauten Ethylenoxideinheiten aufweisende Diisocyanate gemäß US-PS 3 920 598. Die Mitverwendung derartiger, hydrophil modifizierter Polyisocyanate ist jedoch weniger bevorzugt, da die hydrophilen Gruppen beim erfindungsgemäßen Verfahren vorzugsweise über die nachstehend näherbeschriebene Aufbaukomponente b) eingebaut werden.

Grundsätzlich ist es auch möglich, beim erfindungsgemäßen Verfahren die beispielhaft genannten Aufbaukomponenten a1) bis a4) in Kombination mit höherfunktionellen niedermolekularen Polyisocyanaten

wie beispielsweise dem Umsetzungsprodukt von 3 Mol 2,4-Diisocyanatotoluol mit einem Mol Trimethylolpropan und/oder in Kombination mit monofunktionellen Isocyanaten wie Phenylisocyanat, Hexylisocyanat oder n-Dodecylisocyanat einzusetzen. Auch der Einsatz von monofunktionellen, Polyetherketten mit eingebauten Ethylenoxideinheiten aufweisenden Isocyanaten der beispielsweise in den US-Patentschriften 3 920 598 bzw. 4 237 264 genannten Art ist prinzipiell möglich. Bei Verwendung derartiger monofunktioneller Isocyanate ist jedoch im allgemeinen, insbesondere bei der Herstellung von hochmolekularen Polyurethanen, durch gleichzeitige Mitverwendung von höher als difunktionellen Aufbaukomponenten ein vorzeitiger Kettenabbruch zu verhindern. Vorzugsweise werden beim erfindungsgemäßen Verfahren difunktionelle Isocyanate der oben beispielhaft genannten Art als Aufbaukomponente a) verwendet.

Für das erfindungsgemäße Verfahren geeignete Aufbaukomponenten b) sind beispielsweise

b1) die aus der Polyurethanchemie bekannten Polyhydroxypolyester oder -polyether des Molekulargewichtsbereichs 400 bis 4000, vorzugsweise die entsprechenden difunktionellen Verbindungen, wie sie in an sich bekannter Weise durch Umsetzung von mehrbasischen Säuren, insbesondere difunktionellen Säuren wie z.B. Adipinsäure, Phthalsäure, Tetrahydrophthalsäure und/oder Hexahydrophthalsäure mit überschüssigen Mengen an mehrwertigen Alkoholen, vorzugsweise zweiwertigen Alkoholen der nachstehend unter b2) beispielhaft genannten Art bzw. durch Alkoxylierung geeigneter Startermoleküle wie z.B. Wasser, Ammoniak, Anilin oder den nachstehend unter b2) beispielhaft genannten mehrwertigen Alkoholen mit Alkylenoxiden wie z.B. Ethylenoxid und/oder Propylenoxid zugänglich sind.

Für das erfindungsgemäße Verfahren geeignete Aufbaukomponenten b) sind weiterhin beispielsweise

b2) mehrwertige Alkohole, insbesondere zweiwertige Alkohole des Molekulargewichtsbereichs 62 bis 399, insbesondere die entsprechenden Alkanpolyole wie z.B. Ethylenglykol, Propylenglykol, Tetramethylendiol, Hexamethylendiol, Glycerin, Trimethylolpropan oder Trimethylolethan oder auch niedermolekulare, Ethergruppen aufweisende Alkohole wie z.B. Diethylenglykol, Triethylenglykol, Dipropylenglykol oder Tripropylenglykol. Beliebige Gemische derartiger Alkohole können ebenfalls beim erfindungsgemäßen Verfahren eingesetzt werden.

Für das erfindungsgemäße Verfahren geeignete Aufbaukomponenten b) sind weiterhin beispielsweise

b3) mindestens zwei aminische oder hydrazinische Aminogruppen aufweisende Verbindungen des Molekulargewichtsbereichs 32 bis 400 wie z.B. Ethylendiamin, Hexamethylendiamin, Isophorondiamin, 2,4-Diaminotoluol, 4,4'-Diaminodiphenylmethan, 4,4'-Diaminodicyclohexylmethan, Diethylentriamin, Triethylentetramin, Hydrazin bzw. Hydrazinhydrat. Derartige Aufbaukomponenten können auch in blokkierter Form, d.h. insbesondere in Form der entsprechenden Ketimine bzw. Ketazine (Umsetzungsprodukte mit einfachen Ketonen wie Aceton, Methylethylketon oder Methylisobutylketon) eingesetzt werden. Bei Verwendung derartiger blockierter Kettenverlängerungsmittel erfolgt erst unter dem hydrolytischen Einfluß des Dispergierwassers eine Freisetzung der mit Isocyanatgruppen reaktionsfähigen Gruppen.

Weitere als Aubaukomponente b) geeignete Verbindungen sind beispielsweise

b4) ionische Aufbaukomponenten oder potentielle ionische Aufbaukomponenten, die im allgemeinen ein Molekulargewicht von 60 bis 400, vorzugsweise 89 bis 400 aufweisen, und die neben mindestens einer gegenüber Isocyanatgruppen reaktionsfähigen Gruppe mindestens eine ternäre oder quaternäre Ammoniumgruppe oder in eine derartige Gruppe überführbare Gruppe aufweisen. Hierzu gehören beispielsweise tertiären Aminstickstoff aufweisende Aminoalkohole, deren tertiäre Stickstoffatome während oder nach Beendigung der Isocyanat-Polyadditionsreaktion durch Neutralisation oder Quaternierung zumindest teilweise in ternäre oder quaternäre Ammoniumgruppen überführt werden können, wie beispielsweise N-Methyl-diethanolamin, N-Butyl-diethanolamin, N-Methyl-diisopropanolamin, N-Ethyl-diethanolamin, N-Ethyl-diisopropanolamin oder N,N'-Bis-(2-hydroxyethyl)-perhydropyrazin oder auch entsprechende einwertige Alkohole wie z.B. N,N-Dimethylethanolamin, 2-(2-Dimethylamino-ethoxy)-ethanol, N,N-Diethylethanolamin, 2-(2-Diethylamino-ethoxy)-ethanol, N,N-Di-n-butyl-aminoethanol, N-(3-Hydroxypropyl)-dimethylamin, N-(2-Hydroxypropyl)-dimethylamin, 1-Diethylamino-2-propanol oder 1,3-Bis-(dimethylamino)-2-propanol. Hierzu gehören ferner analoge Aufbaukomponenten mit mindestens einer teert. Aminogruppe, d.h. potentiellen ternären oder quaternären Ammoniumgruppe, die anstelle der Hydroxylgruppe bzw. der Hydroxylgruppen mindestens eine primäre oder sekundäre aminische oder hydrazinische Aminogruppe aufweisen, wie z.B. N-Methyl-bis-(3-aminopropyl)-amin, N-Methyl-bis-(2-aminoethyl)-amin oder N,N',N''-Trimethyl-diethylentriamin, ferner monofunktionelle Verbindungen wie z.B. 1-Amino-2-diethylamino-ethan, 1-Amino-3-dimethylaminopropan, 1-Amino-3-diethylamino-propan oder N,N-Dimethylhydrazin.

Beim erfindungsgemäßen Verfahren erfolgt der Einbau der ionischen Gruppen, d.h. der ternären bzw. quaternären Ammoniumgruppen vorzugsweise unter Mitverwendung von tert. Aminogruppen aufweisenden Aufbaukomponenten unter anschließender Überführung der tert. Aminogruppen in die entsprechenden Ammoniumgruppen durch Neutralisation mit anorganischen oder organischen Säuren wie z.B. Salzsäure,

Essigsäure, Fumarsäure, Maleinsäure, Milchsäure, Weinsäure, Oxalsäure, N-Methyl-N-(methylaminocarbonyl)-aminomethansulfonsäure oder Phosphorsäure oder durch Quaternierung mit geeigneten Quaternierungsmitteln wie z.B. Methylchlorid, Methyljodid, Dimethylsulfat, Benzylchlorid, Chloressigsäureethylester oder Bromacetamid. Weitere Beispiele geeigneter Neutralisations- oder Quaternierungsmittel sind in der DE-OS 2 827 156 offenbart. Grundsätzlich kann diese Neutralisation oder Quaternierung der tert. Stickstoff aufweisenden Aufbaukomponenten auch vor oder während der Isocyanat-Polyadditionsreaktion erfolgen, obwohl dies weniger bevorzugt ist. Es ist auch möglich ternäre bzw. quaternäre Ammoniumgruppen in die Polyisocyanat-Polyadditionsprodukte über tert. Aminogruppen aufweisende, als Aufbaukomponente b1) eingesetzte Polyetherpolyole unter anschließender Neutralisation bzw. Quaternierung der tert. Aminogruppen einzuführen. Auch dies ist jedoch keine bevorzugte Ausführungsform des erfindungsgemäßen Verfahrens.

Bei allen Varianten des erfindungsgemäßen Verfahrens werden die Menge der tert. Aminogruppen bzw. Ammoniumgruppen aufweisenden Aufbaukomponenten bzw. der Neutralisations- oder Quaternierungsgrad so gewählt, daß in den erfindungsgemäßen Verfahrensprodukten 2 bis 300, vorzugsweise 5 bis 200 und besonders bevorzugt 5 bis 120 Milliäquivalente pro 100 g Feststoff an ternären bzw. quaternären Ammoniumgruppen vorliegen. Erfindungsgemäß als Aufbaukomponente b) geeignet sind weiterhin beispielsweise

b5) innerhalb von Polyetherketten eingebaute Ethylenoxideinheiten aufweisende ein- oder zweiwertige Alkohole. Hierzu gehören beispielsweise Verbindungen der allgemeinen Formel

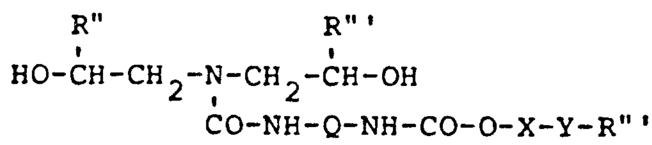

in welcher

- Q für einen zweiwertigen Rest steht, wie er durch Entfernung der Isocyanatgruppen aus einem Diisocyanat der Formel $Q(NCO)_2$ der vorstehend unter a1) genannten Art erhalten wird,
- R'' für Wasserstoff oder einen einwertigen Kohlenwasserstoffrest mit 1 bis 8 Kohlenstoffatomen, vorzugsweise für Wasserstoff oder eine Methylgruppe steht,
- R''' für einen einwertigen Kohlenwasserstoffrest mit 1 bis 12 Kohlenstoffatomen, vorzugsweise einen unsubstituierten Alkylrest mit 1 bis 4 Kohlenstoffatomen steht,
- X für einen Rest steht, wie er durch Entfernung des endständigen Sauerstoffatoms von einer Polyalkylenoxidkette mit 5 bis 90, vorzugsweise 20 bis 70 Kettengliedern erhalten wird, welche zumindest zu 40 %, vorzugsweise zumindest zu 65 % aus Ethylenoxideinheiten bestehen und die neben Ethylenoxideinheiten auch Propylenoxid-, Butylenoxid- oder Styroloxid-Einheiten darstellen können, wobei unter den letztgenannten Einheiten Propylenoxideinheiten bevorzugt sind, und
- Y für Sauerstoff oder $-NR^{iv}-$ steht, wobei $R^{iv}$ bezüglich seiner Definition R''' entspricht.

Die Herstellung der Verbindungen der letztgenannten Formeln kann gemäß den Verfahrensweisen der US-PS 3 905 929 oder der US-PS 4 190 566 erfolgen.

Weitere bevorzugte hydrophile Einbaukomponenten b5) sind Verbindungen der allgemeinen Formel

HO-X-Y-R'''

wobei

X,Y und R''' die bereits genannte Bedeutung haben.

Bei Mitverwendung derartiger, monofunktioneller, nichtionisch hydrophiler Polyether kann es oftmals von Vorteil sein, durch Mitverwendung von mehr als difunktionellen Aufbaukomponenten einen vorzeitigen Kettenabbruch zu verhindern. Die monofunktionellen Polyether der zuletzt genannten allgemeinen Formel werden nach an sich bekannten Verfahren, wie sie beispielsweise in den US-Patentschriften 3 905 929, 4 190 566 oder 4 237 264 beschrieben sind, hergestellt.

Weitere erfindungsgemäß geeignete Aufbaukomponenten b) sind

b6) Aminoalkohole des Molekulargewichtsbereichs 61 bis 300, die keinen tert. Stickstoff aufweisen, wie z.B. Ethanolamin, Propanolamin, Diethanolamin oder Dipropanolamin.

Weitere erfindungsgemäß geeignete Aufbaukomponenten b) sind

b7) Acylharnstoffgruppen aufweisende, mehrwertige, vorzugsweise zweiwertige Alkohole, wie sie beispielsweise durch Umsetzung der unter a3) beispielhaft genannten, Acylharnstoffgruppen aufweisenden Diisocyanate, insbesondere jenen auf Basis niedermolekularer Ausgangsdiisocyanate mit den unter b1), b2) und/oder b6) beispielhaft genannten Verbindungen unter Einhaltung eines OH/NCO-Verhältnisses von 1,2:1 bis 30:1, beziehungsweise bei Verwendung der Aminoalkohole b6) eines $NH_2$/NCO-Verhältnisses von 0,6:1 bis 1,2:1 oder, bevorzugt, durch Umsetzung der bei der Erläuterung der Komponente a3) genannten Carbodiimidgruppen aufweisenden Polyisocyanate, vorzugsweise Diisocyanate auf Basis niedermolekularer Ausgangsisocyanate mit den genannten Polyhydroxylverbindungen unter Einhaltung eines OH/NCO-Äquivalentverhältnisses von 1,2:1 bis 30:1, beziehungsweise bei Verwendung der Aminoalkohole b6) eines $NH_2$/NCO-Verhältnisses von 0,6:1 bis 1,2:1 und anschließende Umsetzung der Umsetzungsprodukte mit Carbonsäuren R-COOH im Sinne der obengemachten Ausführungen erhalten werden können. Im Falle der Verwendung von Hydroxylgruppen aufweisenden Ausgangsmaterialien b1 und/oder b2 erfolgt die Umsetzung der Polyhydroxylkomponente mit der Isocyanatkomponente jeweils vorzugsweise unter Einhaltung eines OH/NCO-Äquivalentverhältnisses von 1,5:1 bis 15:1 und insbesondere von 1,5:1 bis 3:1. Die Herstellung der Hydroxylgruppen aufweisenden Aufbaukomponenten b7) bzw. der zu ihrer Herstellung verwendeten Zwischenprodukte mit Carbodiimidgruppen erfolgt im allgemeinen im Temperaturbereich von 25 bis 130 ° C, vorzugsweise von 50 bis 120 ° C, gegebenenfalls in Anwesenheit eines inerten Lösungsmittels der in DE-OS 2 714 293 beispielhaft genannten Art. Bezüglich der Einzelheiten der Herstellung derartiger, Acylharnstoffgruppen aufweisender Polyhydroxylverbindungen sei im übrigen auf diese Vorveröffentlichung verwiesen.

Schließlich ist als weitere erfindungsgemäß geeignete Aufbaukomponente b)

b8) Wasser zu nennen, welches die Doppelfunktion der kontinuierlichen Phase der erfindungsgemäßen Dispersionen einerseits und die eines Kettenverlängerungsmittels andererseits übernehmen kann.

Vorzugsweise werden beim erfindungsgemäßen Verfahren im Sinne der Isocyanat-Additionsreaktion difunktionelle Aufbaukomponenten b) eingesetzt. Es ist jedoch, wie bereits ausgeführt, auch möglich monofunktionelle Aufbaukomponenten b), insbesondere der unter b4) oder b5) genannten Art oder, zwecks Erreichens einer gegebenenfalls erwünschten Molekülverzweigung, höher als difunktionelle Aufbaukomponenten b) einzusetzen.

Zu den gegebenenfalls beim erfindungsgemäßen Verfahren mit einzusetzenden Hilfs- und Zusatzmitteln c) gehören beispielsweise

c1) Lösungsmittel, die gegebenenfalls beim Aufbau der Polyurethane mitverwendet werden. Geeignete Lösungsmittel sind beispielsweise Toluol, Xylol, Aceton, Methylglykolacetat, Ethylglykolacetat, Butylacetat, N-Methylpyrrolidon, Essigsäureethylester oder Methylethylketon. Vorzugsweise werden mit Wasser mischbare Lösungsmittel wie Aceton oder N-Methylpyrrolidon verwendet.

Weitere beim erfindungsgemäßen Verfahren gegebenenfalls mitzuverwendende Hilfs- und Zusatzmittel c) sind beispielsweise

c2) einerseits Verbindungen, die mit Isocyanatgruppen unter Bildung von acylierten Aminogruppen reagieren und andererseits Verbindungen, die mit derartigen acylierten Aminogruppen im Sinne einer Kondensationsreaktion zur Umsetzung befähigt sind. Zu den erstgenannten Verbindungen gehören beispielsweise Ammoniak oder Harnstoff, zu den letztgenannten Verbindungen gehören beispielsweise beliebige Aldehyde, insbesondere Formaldehyd. Die Mitverwendung derartiger Hilfs- und Zusatzmittel c4) erfolgt dann, wenn nach dem, nachstehend näher erläuterten "Schmelzdispergierverfahren" gearbeitet wird.

Weitere, gegebenenfalls mitzuverwendend Hilfs- und Zusatzmittel c) sind beispielsweise

c3) beliebige, aus der Polyurethanchemie an sich bekannte Beschleuniger für die Isocyanat-Polyadditionsreaktion. Im allgemeinen ist die Mitverwendung dieser Katalysatoren jedoch nich erforderlich.

Weitere gegebenenfalls mitzuverwendende Hilfs- und Zusatzmittel c) sind beispielsweise

c4) chemisch nicht fixierte, vorzugsweise nichtionische Emulgatoren, die gegebenenfalls zusätzlich zu den chemisch eingebauten Emulgatoren mitverwendet werden können, deren Einsatz selbstverständlich aber nicht erforderlich ist. Derartige Emulgatoren sind beispielsweise ethoxyliertes Nonylphenol, Polyoxyethylen-laurylether oder Polyoxyethylenlaurat, -oleat oder -stearat, wobei diese Zusatzmittel im allgemeinen 8 bis 50 Oxyethyleneinheiten pro Molekül aufweisen. Diese externen Emulgatoren werden nach Beendigung der Isocyanat-Additionsreaktion den erfindungsgemäßen Verfahrensprodukten gegebenenfalls zugesetzt, um deren Löslichkeits- bzw. Dispergierbarkeit in Wasser zu verbessern. Die hiermit in die erfindungsgemäßen Lösungen oder Dispersionen eingeführten zusätzlichen Oxyethyleneinheiten gehen nicht in die Berechnung des Gehalts der Polyisocyanat-Additionsprodukte an Ethylenoxideinheiten ein, da sich die diesbezüglichen Angaben lediglich auf den Gehalt an chemisch eingebauten Ethylenoxideinheiten beziehen.

Weitere gegebenenfalls mitzuverwendende Hilfs- und Zusatzmittel c) sind die üblichen, wie beispielsweise inerte Füllstoffe, Pigmente, Farbstoff, Weichmacher oder die rheologischen Eigenschaften beeinflussende Zusätze.

Die Durchführung des erfindungsgemäßen Verfahrens, d.h. die Herstellung der erfindungsgemäßen Dispersionen kann nach beliebigen Methoden des Standes der Technik erfolgen. Bei allen Varianten des erfindungsgemäßen Verfahrens ist lediglich darauf zu achten,

(i) daß die Aufbaukomponenten mit ionischen Gruppen oder potentiellen ionischen Gruppen (b4 und/oder, im Falle der Verwendung von tert. Aminstickstoffatome aufweisenden Polyetherpolyolen auch gegebenenfalls b1) in einer solchen Menge in das Polyisocyanat-Additionsprodukt eingebaut werden, bzw. daß der Neutralisationsgrad der in die Polyurethane eingebauten potentiellen ionischen Gruppen so gewählt wird, daß die Polyisocyanat-Additionsprodukte von 2 bis 300, vorzugsweise von 5 bis 200 und insbesondere von 5 bis 120 Milliäquivalente pro 100 g Feststoff an eingebauten ternären oder quaternären Ammoniumgruppen aufweisen, wobei sichergestellt sein muß, daß die Polyisocyanat-Additionsprodukte einen solchen Gehalt an ionischen Gruppen aufweisen, der zusammen mit dem gegebenenfalls ebenfalls vorliegenden nichtionisch-hydrophilen Gruppen die Löslichkeit bzw. Dispergierbarkeit der Polyisocyanat-Additionsprodukte in Wasser gewährleistet;

(ii) daß die gegebenenfalls mitzuverwendenden Aufbaukomponenten mit nicht-ionisch-hydrophilen Gruppen (a4 und/oder b5) maximal in einer solchen Menge mitverwendet werden, daß der Gehalt der Polyisocyanat-Additionsprodukte an innerhalb von Polyetherketten vorliegenden Ethylenoxideinheiten $-CH_2-CH_2-O-$25 Gew.-%, vorzugsweise 20 Gew.-% und besonders bevorzugt 15 Gew.-%, bezogen auf Feststoff, nicht übersteigt und

(iii) daß die Menge der Acylharnstoffgruppen aufweisenden Aufbaukomponenten (a3 und/oder b7) so bemessen wird, daß der Gehalt der Polyisocyanat-Additionsprodukte an, Teile von Acylharnstoffgruppen bildenden, Struktureinheiten der Formel

-NH-CO-N-CO-

bei 0,1 bis 20 Gew.-%, vorzugsweise 2 bis 15 Gew.-% liegt.

Wie bereits ausgeführt kann die Durchführung des erfindungsgemäßen Verfahrens nach mehreren, an sich bekannten Ausführungsformen erfolgen:

1. gemäß dem "Acetonverfahren" wird in Analogie zu der Lehre der DE-OS 1 495 745 (= US-PS 3 479 310) bzw. zu der DE-OS 1 495 847 (= GB-PS 1 076 788) ein NCO-endständiges Prepolymer in der Schmelze oder auch gegebenenfalls in Gegenwart von Lösungsmitteln der unter c3) beispielhaft genannten Art hergestellt. Als Ausgangsmaterialien werden hierbei insbesondere einfache Diisocyanate der unter a1) genannten Art, gegebenenfalls höhermolekulare Polyhydroxylverbindungen der unter b1) genannten Art, gegebenenfalls Kettenverlängerungsmittel der unter b2) oder auch unter b3) beispielhaft genannten Art, ionische Aufbaukomponenten der unter b4) beispielhaft genannten Art bzw. die entsprechenden potentiellen ionischen Aufbaukomponenten und gegebenenfalls nicht-ionisch-hydrophile Aufbaukomponenten der unter b5) beispielhaft genannten Art unter Mitverwendung der unter a3) und/oder b7) beispielhaft genannten, Acylharnstoffgruppen aufweisenden Aufbaukomponenten eingesetzt. Im allgemeinen wird hierbei zunächst ein NCO-Prepolymer hergestellt, welches anschließend in einem geeigneten Lösungsmittel gelöst wird, worauf sich die Kettenverlängerung in Lösung zum ausreagierten Polyurethan anschließt. Der Einbau der ionischen Gruppen erfolgt hierbei bei der Herstellung des Prepolymeren durch Mitverwendung entsprechender ionischer bzw. potentieller ionischer Aufbaukomponenten b4) und/oder bei der Kettenverlängerung unter Mitverwendung von niedermolekularen, difunktionellen ionischen oder potentiellen ionischen Aufbaukomponenten der unter b4) beispielhaft genannten Art, wobei die Überführung der potentiellen ionischen Gruppen in ionische Gruppen vor oder während der Dispergierung in Wasser erfolgt. Bei dieser Ausführungsform werden vorzugsweise difunktionelle Aufbaukomponenten der beispielhaft genannten Art eingesetzt. Das Äquivalentverhältnis zwischen Isocyanatgruppen und gegenüber Isocyanatgruppen reaktionsfähigen Gruppen liegt vorzugsweise zwischen 0,7:1 und 2:1. Die Lösung des so erhaltenen Polyurethans wird dann mit Wasser vermischt, in welchem gegebenenfalls Neutralisationsmittel der unter b4) beispielhaft genannten Art zwecks Neutralisation von gegebenenfalls vorliegenden potentiellen ionischen Gruppen vorliegen. Gewünschtenfalls kann im Anschluß an die Durchmischung mit dem Wasser das Lösungsmittel aus der entstandenen wäßrigen Polyurethandispersion abdestilliert werden. Bei dieser Ausführungsform ist es auch möglich, die Überführung von gegebenenfalls vorliegenden tertiären Stickstoffatomen in quaternäre Stickstoffatome durch Quaternierung des im Lösungsmittel gelöst vorliegenden Polyisocyanat-Additionsprodukts zu bewirken.

Eine Variante dieser Ausführungsform besteht in der Verwendung von vorab separat hergestellten NCO-Prepolymeren der unter a2) beispielhaft genannten Art, die zusammen mit Acylharnstoffgruppen

aufweisenden Aufbaukomponenten der unter a3) und/oder b7) genannten Art und vorzugsweise niedermolekularen ionischen Aufbaukomponenten der unter b4) genannten Art und gegebenenfalls nichtionisch-hydrophilen Aufbaukomponenten der unter b5) genannten Art in Lösung zum Polyurethan ausreagiert werden, worauf sich die Durchmischung mit Wasser anschließt.

2. Eine weitere Ausführungsform des erfindungsgemäßen Verfahrens entspricht der aus DE-OS 2 725 589, US-PS 4 269 748, US-PS 4 192 937 oder US-PS 4 292 226 bekannten Verfahrensweise, gemäß welcher blockierte Kettenverlängerungsmittel der unter b3) genannten Art oder auch, entsprechend der Lehre der US-PS 4 192 937 Oxazolidine oder entsprechend der US-PS 4 292 226 Aminsalze als potentielle Kettenverlängerungsmittel eingesetzt werden. Hierbei werden vorab hergestellte NCO-Prepolymere, die aus den oben beispielhaft genannten Ausgangsmaterialien unter Mitverwendung von unter a3) und/oder b7) beispielhaft genannten, Acylharnstoffgruppen aufweisenden Aufbaukomponenten und unter Mitverwendung von ionischen Aufbaukomponenten der unter b4) genannten Art und gegebenenfalls unter Mitverwendung von nicht-ionischhydrophilen Aufbaukomponenten der unter b5) genannten Art unter Einhaltung eines Äquivalentverhältnisses von Isocyanatgruppen zu gegenüber Isocyanatgruppen reaktionsfähigen Gruppen von 1,2:1 bis 3:1 in der Schmelze oder in Lösung hergestellt worden sind mit den genannten blockierten Kettenverlängerungsmitteln vermischt und dieses Gemisch anschließend mit Wasser versetzt, wodurch das vorher blockierte Amin oder Hydrazin freigesetzt wird und als Kettenverlängerer des Prepolymeren reagiert. Auch hier kann das Wasser gegebenenfalls das Neutralisationsmittel für gegebenenfalls vorliegende potentielle ionische Gruppen gelöst enthalten. Auch bei dieser Ausführungsform ist eine Quaternierung des Polyisocyanat-Additionsprodukts in der Schmelze oder in Lösung, beispielsweise vor der Zugabe der blockierten Kettenverlängerungsmittel möglich.

3. Eine weitere Ausführungsform des erfindungsgemäßen Verfahrens entspricht dem aus US-PS 3 756 992 bekannten "Schmelzdispergier-Verfahren" gemäß welchem endständige Isocyanatgruppen von hydrophil modifizierten Prepolymeren mit Harnstoff, Ammoniak oder anderen geeigneten Verbindungen in der Schmelze in acylierte Amine überführt werden und diese vor, während oder nach der Zugabe von Wasser durch Reaktion mit Formaldehyd in Methylolgruppen überführt werden. Die Methylolgruppen aufweisenden, in Wasser dispergierten oder gelösten Produkte können dann beispielsweise durch Erhitzen auf 50 bis 150 °C und eine hierdurch hervorgerufene Kondensationsreaktion der reaktiven Methylolgruppen in hochmolekulare Polyurethane überführt werden. Auch hier ist eine Quaternierung von gegebenenfalls vorliegenden tert. Stickstoffatomen vor der Zugabe des Wassers denkbar.

Die hierbei eingesetzten NCO-Prepolymeren werden ebenfalls wie bei der zweiten Ausführungsform unter Mitverwendung der erfindungswesentlichen Aufbaukomponente a3) und/oder b7) hergestellt.

4. Eine weitere Ausführungsform der Durchführung des erfindungsgemäßen Verfahrens besteht darin, NCO-Gruppen aufweisende Prepolymere, die, wie bereits oben unter 2. beschrieben die erfindungswesentlichen Aufbaukomponenten a3) und/oder b7) eingebaut enthalten, als solche zunächst in Wasser zu dispergieren, welches gegebenenfalls das zur Neutralisation von gegebenenfalls vorliegenden potentiellen ionischen Gruppen benötigte Neutralisationsmittel enthält, und anschließend der so erhaltenen wäßrigen Dispersion ein aminisches oder hydrazinisches Kettenverlängerungs- oder Vernetzungsmittel der unter b3) genannten Art mit freien Aminogruppen unter Einhaltung eines NCO/NH-Äquivalentverhältnisses von 1:0,2 bis 1:1,1, vorzugsweise 1:0,3 bis 1:0,98 zuzumischen. Die Kettenverlängerung wird dann bei 5 bis 90 °C, vorzugsweise 20 bis 80 °C durchgeführt. Auch hier wäre eine Quaternierung der, gegebenenfalls tert. Stickstoffatome aufweisenden NCO-Prepolymeren vor der Dispergierung in Wasser denkbar.

Grundsätzlich wäre es im Falle der Verwendung von tert. Stickstoffatome aufweisenden Aufbaukomponenten b4) und/oder b1) unter anschließender Quaternierung oder im Falle der Verwendung der entsprechenden Verbindungen, welche bereits quaternierte tert. Stickstoffatome aufweisen auch möglich, die erfindungsgemäßen Löungen oder Dispersionen dergestalt herzustellen, daß man die Isocyanat-Additionsreaktion zunächst unter Verwendung von Carbodiimidgruppen aufweisenden Ausgangsmaterialien, die konstitutioneli den Verbindungen a3) und/oder b7) entsprechen, durchzuführen und die Anlagerung der Carbonsäure unter Bildung von Acylharnstoffgruppen im Anschluß an die Isocyanat-Additionsreaktion vorzunehmen. Eine derartige Arbeitsweise ist jedoch gegenüber den beschriebenen Ausführungsformen des erfindungsgemäßen Verfahrens weniger bevorzugt.

Durch geeignete Wahl der Ausgangskomponenten und der bei den einzelnen Ausführungsformen zum Einsatz gelangenden Äquivalentverhältnisse können die Eigenschaften der Polyurethane, insbesondere auch ihr Molekulargewicht, innerhalb weiter Grenzen variiert und dem jeweils angestrebten Verwendungszweck angepaßt werden. Der Begriff "Polyisocyanat-Additionsprodukte" bzw. "Polyisocyanat-Polyadditionsprodukte" umfaßt im Rahmen der vorliegenden Erfindung somit auch vergleichsweise niedermolekulare Umsetzungsprodukte, die beispielsweise durch die ionische Modifizierung der Acylharnstoffgruppen aufweisenden Isocyanate mit einwertigen, tert. Aminogruppen aufweisenden Alkoholen unter anschließender Neutralisation oder Quaternierung ohne weitere Kettenverlängerung des Moleküls hergestellt werden können.

Die Überführung der gemäß den einzelnen Ausführungsformen erhaltenen Lösungen oder Schmelzen der Polyisocyanat-Additionsprodukte oder Prepolymeren in eine wäßrige Lösung oder Dispersion kann grundsätzlich nach verschiedenen Arbeitsweisen erfolgen. Die Verwendung von Geräten, die hohe Schergefälle erzeugen oder die Verwendung von nicht-mechanischen Dispergiermitteln wie Schallwellen extrem hoher Frequenz ist möglich, im allgemeinen jedoch nicht erforderlich, da auch einfache Mischaggregate wie z.B. Rührkessel oder sogenannte Rücklaufmischer zur Dispergierung der im allgemeinen selbst dispergierbaren Polyisocyanat-Additionsprodukte bzw. Prepolymeren ausreichend sind. Aus dem gleichen Grund ist es auch prinzipiell möglich, erfindungsgemäße Polyisocyanat-Additionsprodukte in fester Form zu gewinnen, d.h. in Form von Pulvern, Harzen oder in stückiger Form und diese Materialien in einem unabhängigen Schritt zu dispergieren oder zu lösen.

Außerdem wurde überraschenderweise festgestellt, daß es auch möglich ist, die Versalzung der potentiellen hydrophilen Gruppen zunächst in dem Maße vorzunehmen, daß zunächst relativ grobteilige Dispersionen oder Suspensionen entstehen und diese nachträglich durch Zugabe weiterer Gegenionen zu den noch vorhandenen potentiell ionischen Gruppen in feinteilige Dispersionen oder Lösungen überführt werden. Aufgrund der niedrigen Viskosität der grobteiligen Zwischenstufen lassen sich diese in höherer Konzentration herstellen, was zu günstigen Frachtkosten führt.

Gewünschtenfalls können die erfindungsgemäßen Dispersionen auch im Anschluß an ihre Herstellung mit Isocyanaten in Analogie zur Arbeitsweise der DE-OS 2 708 242 modifiziert werden.

Bei aller Ausführungsformen des erfindungsgemäßen Verfahrens wird im allgemeinen die Menge des Wassers so bemessen, daß Lösungen oder Dispersionen mit einem Feststoffgehalt von bis zu 60 Gew.-%, vorzugsweise von 10 bis 60 Gew.-% und insbesondere von 10 bis 50 Gew.-% resultieren. Der Teilchendurchmesser der dispergierten Festkörper liegt im allgemeinen unter 1 µm, bevorzugt zwischen 0,001 und 0,5 µm. Der durchschnittliche Teilchendurchmesser sollte unter 0,5 µm, bevorzugt zwischen 0,01 und 0,3 µm liegen.

Bei sehr niedrigem Gehalt an hydrophilen Gruppen können auch mittlere Teilchendurchmesser zwischen 5 µ und ca. 50 µ erhalten werden. Derartige Dispersionen sind beispielsweise für die Herstellung von Polyurethanpulvern von Interesse.

Wenn die gelösten oder dispergierten Polyisocyanat-Additionsprodukte auch Ethylenoxid-Einheiten als hydrophile Gruppen enthalten, sind sie trotz ihres Gehalts an ionischen Gruppen weitgehend unempfindlich gegen Elektrolyte.

Die Lösungen oder Dispersionen können mit anderen Dispersionen verschnitten werden, wie z.B. mit Polyvinylacetat, Polyethylen-, Polystyrol-, Polybutadien-, Polyvinylchlorid-, Polyacrylat- und Copolymerisat-Kunststoffdispersionen. Auch der Zusatz von an sich bekannten chemisch nicht fixierten vorzugsweise nichtionischen Emulgatoren ist, wie bereits oben ausgeführt, möglich, jedoch selbstverständlich nicht erforderlich.

Schließlich können auch Füllstoffe, Weichmacher, Pigmente, Ruß- und Kieselsäuresole, Aluminium-, Ton-, Asbest-Dispersionen in die Dispersionen eingearbeitet werden.

Die erfindungsgemäßen Lösungen bzw. Dispersionen sind meist stabil, lager- und versandfähig und können zu beliebig späterem Zeitpunkt, z.B. formgebend, verarbeitet werden. Sie trocknen im allgemeinen unmittelbar zu formstabilen Kunststoffüberzügen auf, jedoch kann die Formgebung der Verfahrensprodukte auch in Gegenwart von an sich bekannten Vernetzungsmitteln erfolgen.

Je nach Art der eingebauten Acylharnstoffgruppen erhält man Verfahrensprodukte mit unterschiedlichen Eigenschaften. So können durch Einbau von längerkettigen Fettsäuren R-COOH mit mindestens 10 Kohlenstoffatomen wertvolle Papierleimungsmittel hergestellt werden.

Von weiterem Vorteil ist die problemlose Einführung von seitenständigen Doppelbindungen durch Einbau von ungesättigten Carbonsäuren R-COOH, wodurch die Möglichkeit einer nachträglichen Vernetzung geschaffen wird.

Weiterhin kann durch Wahl der seitenständigen Acylharnstoffgruppenreste die Hydrophilie bzw. Hydrophobie der Produkte auf einfache Weise gesteuert werden.

Die Verfahrensprodukte sind zur Beschichtung bzw. zum Überziehen und zum Imprägnieren von gewebten und nicht-gewebten Textilien, Leder, Papier, Holz, Metallen, Keramik, Stein, Beton, Bitumen, Hartfaser, Stroh, Glas, Porzellan, Kunststoffen der verschiedensten Art, Glasfasern, zur antistatischen und knitterfreien Ausrüstung, als Binder für Vliese, Klebstoffe, Haftvermittler, Kaschierungsmittel, Hydrophobiermittel, Weichmacher, Bindemittel, z.B. für Kork- oder Holzmehl, Glasfasern, Asbest, Papierartige Materialien, Plastik- oder Gummiabfälle, keramische Materialien, als Hilfsmittel im Zeugdruck und in der Papierindustrie,

als Zusatz zu Polymerisaten, als Schlichtemittel, beispielsweise für Glasfasern, und zur Lederausrüstung geeignet.

Erfindungsgemäße Dispersionen und insbesondere Lösungen von Acylharnstoffgruppen aufweisenden Polyisocyanat-Additionsprodukten, die als hydrophile Zentren ausschließlich Ammoniumgruppen und ein aus der Art und Stöchiometrie der Ausgangsmaterialien errechenbares Molekulargewicht von 600 bis 10 000, vorzugsweise 800 bis 5000 und besonders bevorzugt von 800 bis 3000 aufweisen sind ganz besonders gut für die Papierleimung geeignet. Diese niedermolekularen Polyisocyanat-Additionsprodukte werden vorzugsweise ohne die Mitverwendung von höhermolekularen Polyhydroxylverbindungen der unter b1) beispielhaft genannten Art und gegebenenfalls unter Mitverwendung von Kettenabbrechern wie z.B. monofunktionellen Alkoholen wie Methanol, Ethanol, n-Butanol oder n-Octanol hergestellt, wobei zunächst aus difunktionellen Ausgangsmaterialien unter Verwendung eines NCO-Überschusses ein NCO-Prepolymer hergestellt wird, welches dann mit dem Kettenabbrecher zur Reaktion gebracht wird.

Im Falle der Verwendung der erfindungsgemäßen Dispersionen oder Lösungen insbesondere den zuletzt genannten Lösungen von kationische Gruppen aufweisenden, vergleichsweise niedermolekularen Polyisocyanat-Additionsprodukte als Papierleimungsmittel bzw. zur Herstellung von Papierleimungsmitteln können die in Papierleimungsmitteln üblichen Zusätze mitverwendet werden. In Betracht kommen beispielsweise Alaun, kationische oder anionische Hilfsmittel, z.B. auf Basis kationischer Stärke, quaternierter Polyamine, quaternierter Polyamidamine, quaternierter basischer Formaldehydharze, Metylcellulose, Carboxymethylcellulose, Ligninsulfonsäuren, Stärken und Polysacchariden verschiedenster Genese, Xanthan, Pullulan, Chitosan, Polymerisaten oder Copolymerisaten von (Meth)Acrylsäure, (Meth)Acrylamid, Malein-, Fumar-, Itaconsäure oder sonstiger Polymeren und Copolymeren mit gegebenenfalls in Salzform vorliegenden Carboxyl- oder Sulfonsäuregruppen bzw. Kollagen, Gelatine, Alginaten und Karagenaten.

Die Wirksamkeit der erfindungsgemäßen Leimungsmittel wird durch Weißtöner nicht verschlechtert. Die wäßrigen Zubereitungen lassen sich zudem ohne Emulgierhilfsmittel herstellen, obgleich der Einsatz solcher Hilfsmittel gegebenenfalls in Betracht zu ziehen ist.

Die Leimungsmittel sind allein oder in Kombination mit anderen Leimungsmitteln besonders gut geeignet zur Oberflächenleimung von Papier, können selbstverständlich aber auch zur Masseleimung eingesetzt werden. Sie können nicht nur bei kreidehaltigen oder kaolinhaltigen Papieren verwendet werden, sondern auch bei solchen, die keinen oder einen andersartigen Füllstoff enthalten, wie z.B. Talkum oder Gips Ebenso sind sie zur Leimung von cellulosischen Materialien wie Pappe, Textilmaterial, Leder, Karton oder Holzspanplatten bzw. Dämmplatten geeignet.

Im folgenden soll die Erfindung beispielhaft erläutert werden. Die angegebenen Teile, Verhältnisse und Prozente beziehen sich auf das Gewicht, sofern nichts anderes vermerkt ist.

## Beispiel 1

90,7 Teile (0,52 Mol) einer Mischung aus 2,4-Toluylen-diisocyanat und 2,6-Toluylen-diisocyanat (Verh. 65:35) werden mit 0,1 ml einer Lösung eines technischen Gemisches aus 1-Methyl-1-phospha-2-cyclopenten-1-oxid und 1-Methyl-1-phospha-3-cyclopenten-1-oxid in N-Methylpyrrolidon (1:6) als Katalysator bei 60 °C carbodiimidisiert. Bei einem NCO-Wert von 20,6 % wird die Reaktion mit 0,1 ml Phosphortrichlorid abgebrochen und 30 Minuten nachgerührt. Es stellt sich ein konstanter NCO-Wert von 19,8 % ein. Anschließend werden 32,2 Teile (0,36 Mol) Butandiol-1,4 sowie 52 Teile Aceton zugegeben. Nach 30 Minuten ist der NCO-Wert auf 0 % gefallen. Bei 60 °C werden 64,8 Teile (0,228 Mol) Stearinsäure zugegeben und 40 Minuten bis zu einer Säurezahl von 0 zur Reaktion gebracht. Danach werden weitere 82,2 Teile (0,47 Mol) einer Mischung aus 2,4-Toluylen-diisocyanat und 2,6-Toluylen-diisocyanat (Verh. 65:35) zugegeben und bei 60 °C bis zu einem NCO-Wert von 8,0 % zur Reaktion gebracht. Es wird mit 200 Teilen Aceton verdünnt und bei 60 °C mit 29,9 Teilen (0,25 Mol) N-Methyldiethanolamin sowie nach 10 Minuten mit 6,4 Teilen (0,086 Mol) n-Butanol versetzt. Bei einem NCO-Wert von 0 % wird mit 22,6 Teilen (0,25 Mol) DL-Milchsäure versalzt und nach 30 Minuten Rührzeit mit 731 Teilen Wasser dispergiert. Das Aceton wird unmittelbar anschließend abgezogen. Man erhält eine feinteilige Dispersion mit einem Feststoffgehalt von 32 Gew.-%, einem Gehalt an quartären Ammoniumgruppen von 80 Milliäquivalenten pro 100 g Feststoff sowie einem Gehalt an acylierten Harnstoffgruppen

$$-NH-CO-\underset{|}{N}-CO-$$

von 6,2 % bezogen auf Feststoff.

Beispiel 2

87 Teile (0,5 Mol) einer Mischung aus 2,4-Toluylen-diisocyanat und 2,6-Toluylen-diisocyanat (Verh. 65:35) werden mit 0,1 ml einer Lösung eines technischen Gemisches aus 1-Methyl-1-phospha-2-cyclopenten-1-oxid und 1-Methyl-1-phospha-3-cyclopenten-1-oxid in N-Methyl-pyrrolidon (1:6) als Katalysator bei 60° C carbodiimidisiert. Bei einem NCO-Wert von 20,6 %, wird die Reaktion mit 0,1 ml Phosphortrichlorid abgebrochen und 30 Minuten nachgerührt. Es stellt sich ein konstanter NCO-Wert von 20,0 % ein. Anschließend werden 31,1 Teile (0,35 Mol) Butandiol-1,4 sowie 50 Teile Aceton zugegeben. Nach 30 Minuten ist der NCO-Wert auf 0 % gefallen. Bei 60° C werden 62,1 Gew.-Teile (0,218 Mol) Stearinsäure zugegeben und 40 Minuten bis zu einer Säurezahl von 0 zur Reaktion gebracht. Danach werden weitere 49,2 Teile (0,28 Mol) einer Mischung aus 2,4-Toluylen-diisocyanat und 2,6-toluylen-diisocyanat (Verh. 65:35) zugegeben und bei 60° C bis zu einem NCO-Wert von 3,5 % zur Reaktion gebracht. Es wird mit 200 Teilen Aceton verdünnt und bei 60° C mit 19,6 Teilen (0,25 Mol) N,N-Dimethylethanolamin abgebrochen. Bei einem NCO-Wert von 0 % wird mit 80,1 Gew.-Teilen (0,22 Mol) einer 50 %igen Lösung von N-Methyl-N-(methylaminocarbonyl)-aminomethansulfonsäurein Wasser versalzt und nach 30 Minuten Rührzeit mit 600 Gew.-Teilen Wasser dispergiert. Das Aceton wird unmittelbar anschließend abgezogen. Man erhält eine feinteilige Dispersion mit einem Feststoffgehalt von 30 %, einem Gehalt an quartären Ammoniumgruppen von 80 Milliäquivalenten pro 100 g Feststoff sowie einen Gehalt an acylierten Harnstoffgruppen -NH-CO-N-CO- von 6,8 % bezogen auf Feststoff.

Beispiel 3

87 Teile (0,5 Mal) einer Mischung aus 2,4-Toluylen-diisocyanat und 2,6-Toluylen-diisocyanat (Verh. 65:35) werden mit 0,1 ml einer Lösung eines technischen Gemisches aus 1-Methyl-1-phospha-2-cyclopenten-1-oxid und 1-Methyl-1-phospha-3-cyclopenten-1-oxid in N-Methyl-pyrrolidon (1:6) als Katalysator bei 60° C carbodiimidisiert. Bei einem NCO-Wert von 19,6 % wird die Reaktion mit 0,1 ml Phosphortrichlorid abgebrochen und 30 Minuten nachgerührt. Es stellt sich ein konstanter NCO-Wert von 18,7 % ein. Das Reaktionsprodukt wird mit 50 Teilen Aceton verdünnt und mit 64,5 Teilen (0,23 Mol) Stearinsäure bei 60° C versetzt. Bei einer Säurezahl von 0 wird mit weiteren 200 Teilen Aceton verdünnt, mit 8,9 Teilen (0,12 Mol) n-Butanol und nach 10 Minuten mit 17,8 Teilen (0,2 Mol) N,N-Dimethylethanolamin versetzt und bei 60° C bis zu einem NCO-Wert von 0 % zur Reaktion gebracht. Anschließend wird mit 72,8 Teilen (0,2 Mol) einer 50 %igen Lösung von N-Methyl-N-(methylaminocarbonyl)-aminomethansulfonsäure in Wasser versalzt und nach 30 Minuten mit 430 Teilen Wasser dispergiert. Das Aceton wird unmittelbar anschließend abdestilliert. Man erhält eine feinteilige Dispersion mit einem Feststoffgehalt von 32 %, einem Gehalt an quartären Ammoniumgruppen von 100 Milliäquivalenten pro 100 g Feststoff sowie einen Gehalt an acylierten Harnstoffgruppen -NH-CO-N-CO- von 9,0 % bezogen auf Feststoff.

Beispiel 4

87 Teile (0,5 Mol) einer Mischung aus 2,4-Toluylen-diisocyanat und 2,6-Toluylen-diisocyanat (Verh. 65:35) werden mit 0,1 ml einer Lösung eines technischen Gemisches aus 1-Methyl-1-phospha-2-cyclopenten-1-oxid und 1-Methyl-1-phospha-3-cyclopenten-1-oxid in N-Methyl-pyrrolidon (1:6) als Katalysator bei 60° C carbodiimidisiert. Bei einem NCO-Wert von 21,7 % wird die Reaktion mit 0,1 ml Phosphortrichlorid abgebrochen und 30 Minuten nachgerührt. Es stellt sich ein konstanter NCO-Wert von 20,0 % ein. Das Reaktionsprodukt wird mit 50 Teilen Aceton verdünnt und mit 62,0 Teilen (0,23 Mol) Stearinsäure bei 60° C versetzt. Nach 60 Minuten werden 31,1 Teile (0,35 Mol) Butandiol-1,4 zugegeben und bis zu einem NCO-Wert von 0 % zur Reaktion gebracht. Danach werden weitere 49,2 Teile (0,28 Mol) einer Mischung aus 2,4-Toluylen-diisocyanat und 2,6-Toluylen-diisocyanat (Verh. 65:35) zugegeben und bei 60° C bis zu einem NCO-Wert von 3,5 % zur Reaktion gebracht. Es wird mit 200 Teilen Aceton verdünnt und bei 60° C mit 19,6 Teilen (0,25 Mol) N,N-Dimethylethanolamin abgebrochen. Bei einem NCO-Wert von 0 % wird mit 80,1 Teilen (0,22 Mol) einer 50 %igen Lösung von N-Methyl-N-(methylaminocarbonyl)-aminomethansulfonsäure in Wasser versalzt und nach 30 Minuten Rührzeit mit 600 Gew.-Teilen Wasser disoergiert. Das Aceton wird unmittelbar anschließend abgezogen. Man erhält eine feinteilige Dispersion mit einem Feststoffgehalt von 27 %, einem Gehalt an quartären Ammoniumgruppen von 80 Milliäquivalenten pro 100 g Feststoff sowie einen Gehalt an acylierten Harnstoffgruppen -NH-CO-N-CO- von 6,8 % bezogen auf Feststoff.

Beispiel 5

87 Teile (0,5 Mol) einer Mischung aus 2,4-Toluylen-diisocyanat und 2,6-Toluylen-diisocyanat (Verh. 65:35) werden mit 0,1 ml einer Lösung eines technischen Gemisches aus 1-Methyl-1-phospha-2-cyclopenten-1-oxid und 1-Methyl-1-phospha-3-cyclopenten-1-oxid in N-Methyl-pyrrolidon (1:6) als Katalysator bei 60°C carbodiimidisiert. Bei einem NCO-Wert von 20,1 % wird die Reaktion mit 0,1 ml Phosphortrichlorid abgebrochen und 30 Minuten nachgerührt. Es stellt sich ein konstanter NCO-Wert von 18,5 % ein. Das Reaktionsprodukt wird mit 50 Teilen Aceton verdünnt und mit 64,7 Gew.-Teilen (0,23 Mol) Stearinsäure bei 60°C versetzt. Bei einer Säurezahl von 0 wird mit weiteren 200 Teilen Aceton verdünnt, mit 8,7 Teilen (0,12 Mol) n-Butanol und nach 10 Minuten mit 17,8 Gew.-Teilen (0,2 Mol) N,N-Dimethylethanolamin versetzt und bei 60°C bis zu einem NCO-Wert von 0 % zur Reaktion gebracht. Anschließend wird mit 72,8 Teilen (0,2 Mol) einer 50 %igen Lösung von N-Methyl-N-(methylaminocarbonyl)-aminomethansulfonsäure in Wasser versalzt. Das Aceton wird unmittelbar anschließend abdestilliert. Man erhält einen kristallinen Feststoff, der in Pulverform zermahlen werden kann und jederzeit in Wasser dispergiert werden kann. Der Feststoff enthält 100 Milliäquivalente pro 100 g Feststoff an quartären Ammoniumionen sowie 9 % an acylierten Harnstoffgruppen -NH-CO-N-CO-.

Beispiel 6

174 Teile (1,0 Mol) einer Mischung aus 2,4-Toluylen-diisocyanat und 2,6-Toluylen-diisocyanat (Verh. 65:35) werden mit 0,2 ml einer Lösung eines technischen Gemisches aus 1-Methyl-1-phospha-2-cyclopenten-1-oxid und 1-Methyl-1-phospha-3-cyclopenten-1-oxid in N-Methyl-pyrrolidon (1:6) als Katalysator bei 60°C carbodiimidisiert. Bei einem NCO-Wert von 27,7 % wird die Reaktion mit 0,2 ml Phosphortrichlorid abgebrochen und 30 Minuten nachgerührt. Es stellt sich ein konstanter NCO-Wert von 25,8 % ein. Das Reaktionsprodukt wird mit 101,8 Teilen (0,36 Mol) Stearinsäure bei 60°C versetzt und 2 Stunden zur Reaktion gebracht. Das entstandene acylierte Harnstoffgruppen aufweisende Reaktionsprodukt hat einen NCO-Wert von 16,6 %.

100 Teile (0,117 Mol) eines Polyesterdiols aus Adipinsäure und Hexandiol (OH-Zahl 133,6) sowie 12 Gew.-Teile eines auf Butanol gestarteeten Polyethylenoxid-polypropylenoxidpolyethers (OH-Zahl: 26; 73,3 % Ethylenoxid) werden 30 Minuten bei 110°C im Wasserstrahlvakuum entwässert. Es wird auf 80°C abgekühlt und mit 32,1 Teilen (0,145 Mol) Isophorondiisocyanat sowie 78,9 Teilen (0,145 Mol) des obengenannten, acylierte Harnstoffgruppen aufweisenden Polyisocyanats versetzt und die Temperatur auf 100°C erhöht. Es stellt sich ein konstanter NCO-Wert von 3,4 % ein. Anschließend werden 4,2 Gew.-Teile n-Butanol zugegeben und mit 900 ml Aceton verdünnt, wobei die Temperatur auf 50°C gesenkt wird. Bei 50°C wird mit 1,1 Teilen (0,022 Mol) Hydrazinhydrat und nach 5 Minuten mit 6,37 Teilen (0,044 Mol) N,N-Bis-(3-aminopropyl)-methylamin in 50 Teilen Aceton verlängert. Nach 10 Minuten wird mit 3,95 Teilen (0,044 Mol) DL-Milchsäure in 20 Teilen Wasser versalzt und nach weiteren 10 Minuten mit 550 Teilen Wasser dispergiert. Das Aceton wird unmittelbar anschließend im Vakuum abgezogen. Man erhält eine feinteilige Dispersion mit einem Feststoffgehalt von 30 %, einem Gehalt an quartären Ammoniumgruppen von 20 Milliäquivalenten pro 100 g Feststoff, einen Gehalt an innerhalb einer Polyetherkette eingebauten Ethylenoxideinheiten von 3,8 % sowie einen Gehalt an acylierten Harnstoffgruppen von 3,9 % bezogen auf Feststoff.

Beispiel 7

522 Gew.-Teile (5,0 Mol) einer Mischung aus 2,4-Toluylendiisocyanat und 2,6-Toluylen-diisocyanat (Verh. 65:35) werden mit 0,6 ml einer Lösung eines technischen Gemisches aus 1-Methyl-1-phospha-2-cyclopenten-1-oxid und 1-Methyl-1-phospha-3-cyclopenten-1-oxid in N-Methyl-pyrrolidon (1:6) als Katalysator bei 60°C carbodiimidisiert. Bei einem NCO-Wert von 28,9 % wird die Reaktion mit 0,2 ml Phosphortrichlorid abgebrochen und 30 Minuten nachgerührt. Es stellt sich ein konstanter NCO-Wert von 26,5 % ein. Das Reaktionsprodukt wird mit 90,2 Teilen (1,05 Mol) Methacrylsäure bei 60°C versetzt und 2 Stunden zur Reaktion gebracht. Das entstandene acylyierte Harnstoffgruppen aufweisende Reaktionsprodukt hat einen NCO-Wert von 22,5 %.

100 Teile (0,117 Mol) eines Polyesterdiols aus Adipinsäure und Hexandiol (OH-Zahl: 133,6) sowie 12 Teile eines auf Butanol gestarteten Polyethylenoxid-polypropylenoxid-polyethers (OH-Zahl: 26; 73,3 % Ethylenoxid) werden 30 Minuten bei 110°C im Wasserstrahlvakuum entwässert. Es wird auf 80°C abgekühlt und mit 32,1 Teilen (0,145 Mol) Isophorondiisocyanat sowie mit 54,0 Gew.-Teilen (0,145 Mol) des obengenannten, acylierte Harnstoffgruppen aufweisenden Polyisocyanats versetzt. Nach 1 Stunde Reaktionszeit wird mit 6,41 Teilen (0,071 Mol) Butandiol-1,4 versetzt und die Temperatur auf 100 °C erhöht. Es stellt sich ein konstanter NCO-Wert von 3,9 % ein. Anschließend wird mit 900 ml Aceton verdünnt, wobei die Temperatur auf 50 °C gesenkt wird. Bei 50 °C wird mit 1,1 Teilen (0,022 Mol) Hydrazinhydrat und nach 5 Minuten mit 6,44 Teilen (0,044 Mol) N,N-Bis-(3-aminopropyl)-methylamin in 50 Gew.-Teilen Aceton verlängert. Nach 10 Minuten wird mit 4,0 Teilen (0,044 Mol) DL-Milchsäure in 20 Teilen Wasser versalzt und nach weiteren 10 Minuten mit 484 Teilen Wasser dispergiert. Das Aceton wird unmittelbar anschließend im Vakuum abgezogen. Man erhält eine feinteilige Dispersion mit einem Feststoffgehalt von 30 %, einem Gehalt an quatären Ammoniumgruppen von 20 Milliäquivalenten pro 100 g Feststoff, einem Gehalt an innerhalb einer Polyetherkette eingebauten Ethylenoxideinheiten von 4,4 % sowie einen Gehalt an acylierten Harnstoffgruppen von 4,1 % bezogen auf Feststoff.

In den nach stehenden Anwendungsbeispielen wird die gemäß Beispiel 1 hergestellte Dispersion bezüglich ihrer Eignung als Leimungsmittel für Papier untersucht.

Anwendungsbeispiele

Die Anwendungsbeispiele sollen die gute Leimungswirkung des erfindungsgemäßen Leimungsmittels auf Papieren unterschiedlicher stofflicher Zusammensetzung demonstrieren. Als Maß für die spezielle Leimung wurde dabei der Cobb-Wert (nach DIN 53 132) bestimmt.

Die verwendeten Papiere hatten die folgende Zusammensetzung:

a) Alaunfreies Papier
50 % Nadelholzzellstoff, 50 % Laubholzzellstoff, 10,5 % Clay-Asche, pH-Wert im stoffauflauf: 7,3; Naßaufnahme in einer Laborleimpresse: ca. 80 %; Papiergewicht: 80 g/m$^2$.

b) Alaunhaltiges Papier
50 % Nadelholzzellstoff, 50 % Laubholzzellstoff, 1 % Alaun, 11,8 % Clay-Asche, pH-Wert im Stoffauflauf: 4,4; Naßaufnahme: ca. 80 %, Papiergewicht: 80 g/m$^2$.

c) Vorgeleimtes Papier
50 % Nadelholzzellstoff, 50 % Laubholzzellstoff, 1 % Alaun, 0,1 % Bewoidleim, 11,9 % Clay-Asche, pH-Wert im Stoffauflauf: 4,5; Naßaufnahme: ca. 60 %; Papiergewicht: 80 g/m$^2$.

d) Kreidehaltiges Papier
50 % Nadelholzzellstoff, 50 % Laubholzzellstoff, 10,9 % Kreide-Asche, pH-Wert im Stoffauflauf: 7,5; Naßaufnahme: ca. 90 %; Papiergewicht: 75 g/m$^2$.

e) Holzhaltiges Papier
40 % Nadelhalzzellstoff, 60 % Holzschliff, 12,0 % Clay-Asche, pH-Wert im Stoffauflauf: 4,5; Naßaufnahme: ca. 40 %; Papiergewicht: 75 g/m$^2$.

Die Leimung der Papiere erfolgte auf einer Laborleimpresse der Fa. Mathis, Zürich/Schweiz, Type HF. Als Leimungsflotte wurde eine Lösung von 5 Gew.-% handelsüblicher Stärke und 0,2 bis 0,6 Gew.-% des zu prüfenden Leimungsmittels (berechnet als 100 %ige Wirksubstanz) in Wasser verwendet.

Die Trocknung der oberflächengeleimten Papiere erfolgte auf einem Trockenzylinder innerhalb einer Minute bei ca. 100 °C. Vor der Leimungsprüfung wurden die Papiere 2 h bei Raumtemperatur klimatisiert. Die ermittelten Ergebnisse sind in Tabelle 1 wiedergegeben.

Tabelle 1

| Papiersorte | Einsatzmenge % Flotte | Leimungswirkung*) |
|---|---|---|
| a) alaunfrei | 0,36 | 28,2 |
| b) alaunhaltig | 0,36 | 65 |
| c) vorgeleimt | 0,36 | 25,2 |
| d) kreidehaltig | 0,36 | 26,2 |
| e) holzartig | 0,36 | 19,5 |

*) Angegeben werden die Cobb-Werte in g/m$^2$ Wasseraufnahme in 60 Sekunden bestimmt nach DIN 53 132.

**Patentansprüche**

**1.** Wäßrige Lösungen oder Dispersionen von Polyisocyanat-Additionsprodukten, die einen ihre Löslichkeit

oder Dispergierbarkeit in Wasser gewährleistenden Gehalt an eingebauten ternären oder quaternären Ammoniumgruppen sowie gegebenenfalls an eingebauten, innerhalb einer Polyetherkette vorliegenden Ethylenoxideinheiten $-CH_2-CH_2-O-$ aufweisen, wobei der Gehalt an ternären oder quaternären Ammoniumgruppen bei 2 bis 300 Milliäquivalenten pro 100 g Feststoff und der Gehalt an den genannten Ethylenoxideinheiten bei 0 bis 25 Gew.-%, bezogen auf Feststoff liegt, dadurch gekennzeichnet, daß die Polyisocyanat-Additionsprodukte innerhalb der Polymerkette eingebaute Segmente der allgemeinen Formel

$$-NH-CO-N-CO-R$$

aufweisen, wobei

R einen gesättigten oder ungesättigten aliphatischen Kohlenwasserstoffrest mit bis zu 35 Kohlenstoffatomen, einen aromatischen Kohlenwasserstoffrest mit 6 bis 10 Kohlenstoffatomen oder einen araliphatischen Kohlenwasserstoffrest mit 7 bis 10 Kohlenstoffatomen bedeutet, oder

R Chlormethyl, Cyclohexyl, para-N,N-Dimethylphenyl, eine Carbonsäureestergruppe, eine Carbonsäureamidgruppe, eine Methylencarbonsäuleestergruppe, eine Methylencarbonsäureamidgruppe, eine Ethylencarbonsäureestergruppe, eine Ethylencarbonsäureamidgruppe, eine cis- oder trans-Vinylidencarbonsäureestergruppe, eine cis- oder trans-Vinylidencarbonsäureamidgruppe, eine ortho-Benzoesäureestergruppe, eine ortho-Benzoesäureamidgruppe oder einen Rest der Formel

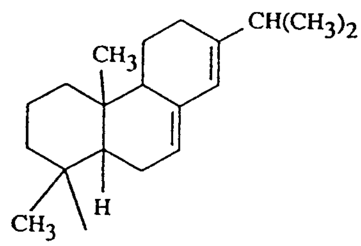

bedeutet,

wobei die oben genannten Ester- und Amidgruppen von einwertigen Alkoholen bzw. Aminen abgeleitet sind,

oder wobei, bei Vorliegen von mehreren Resten R im gleichen Molekül gleichzeitig unterschiedliche, der genannten Definition entsprechende, Rest R vorliegen können,

wobei die Gesamtmenge der eingebauten Struktureinheiten der genannten Formel einen Gehalt des Polyisocyanat-Additionsprodukts an acylierten Harnstoffgruppen der Formel

$$-NH-CO-N-CO-$$

von 0,1 bis 20 Gew.-%, bezogen auf Feststoff, entspricht.

**2.** Verfahren zur Herstellung von wäßrigen Lösungen oder Dispersionen gemäß Anspruch 1 durch Umsetzung von

a) organischen Polyisocyanaten, gegebenenfalls unter Mitverwendung von organischen Monoisocyanaten mit

b) gegenüber Isocyanatgruppen reaktionsfähige Gruppen aufweisenden Verbindungen gegebenenfalls unter Mitverwendung bzw. in Anwesenheit von

c) weiteren Hilfs- und Zusatzmitteln,

wobei als Aufbaukomponenten b) ternäre oder quaternäre Ammoniumgruppen oder in derartige Gruppen überführbare Gruppen aufweisende Aufbaukomponenten mitverwendet werden, wobei die zumindest teilweise Überführung der in Salzgruppen der genannten Art überführbaren Gruppen während oder anschließend an die Polyadditionsreaktion erfolgt, und gegebenenfalls unter Mitverwendung von Aufbaukomponenten a) und/oder b), welche innerhalb einer Polyetherkette vorliegende Ethylenoxideinheiten aufweisen, wobei die Gesamtmenge derartiger hydrophiler Aufbaukomponenten so bemessen wird, daß in dem Polyisocyanat-Additionsprodukt eine die Löslichkeit oder Dispergierbarkeit gewährleistende Menge an ternären oder quaternären Ammoniumgruppen von 2 bis 300 Milliäquivalenten pro 100 g Feststoff und gegebenenfalls an Ethylenoxideinheiten der genannten Art von 0 bis 25 Gew.-% vorliegt, und Überführung des so hergestellten Polyisocyanat-Additionsprodukts in eine wäßrige Lösung oder Dispersion während oder im Anschluß an die Additionsreaktion, dadurch gekennzeichnet, daß man als Aufbaukomponenten a) und/oder b) zumindest anteilig Acylharnstoffgruppen der Formel

$$-NH-CO-\underset{|}{N}-CO-R$$

aufweisende Aufbaukomponenten (mit)verwendet, deren Menge so bemessen wird, daß in dem Polyisocyanat-Additionsprodukt von 0,1 bis 20 Gew.-%, bezogen auf Feststoff, an, Teil der genannten Acylharnstoffgruppen bildenden Struktureinheiten der Formel

$$-NH-CO-\underset{|}{N}-CO-$$

vorliegen.

## Claims

1. Aqueous solutions or dispersions of polyisocyanate addition products containing incorporated ternary or quaternary ammonium groups and, if desired, incorporated ethylene oxide units $-CH_2-CH_2-O-$ present within a polyether chain in an amount ensuring their solubility or dispersibility in water, the ternary or quaternary ammonium group content being 2 to 300 milliequivalents per 100 g of solid and the content of the ethylene oxide units mentioned being 0 to 25% by weight, relative to solids, characterised in that the polyisocyanate addition products have, incorporated within the polymer chain, segments of the general formula

$$-NH-CO-\underset{|}{N}-CO-R$$

in which

R denotes a saturated or unsaturated aliphatic hydrocarbon radical having up to 35 carbon atoms, an aromatic hydrocarbon radical having 6 to 10 carbon atoms or an araliphatic hydrocarbon radical having 7 to 10 carbon atoms, or

R denotes chloromethyl, cyclohexyl, para-N,N-dimethylphenyl, a carboxylic ester group, a carboxamide group, a methylenecarboxylic ester group, a methylenecarboxamide group, an ethylenecarboxylic ester group, an ethylenecarboxamide group, a cis- or trans-vinylidinecarboxylic ester group, a cis- or trans-vinylidinecarboxamide group, an ortho-benzoic ester group, an ortho-benzamide group or a radical of the formula

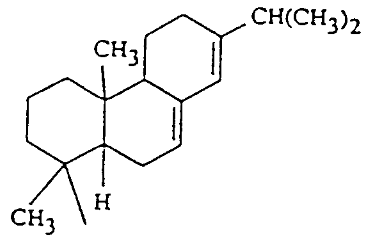

,

the abovementioned ester and amide groups being derived from monohydric alcohols or amines,

or, if a plurality of radicals R are present in the same molecule, it being possible for different radicals R of the definition mentioned to be present simultaneously,

and the total amount of incorporated structural units of the formula mentioned corresponding to the presence in the polyisocyanate addition product of an acylated urea group of the formula

$$-NH-CO-N-CO-$$

in an amount of 0.1 to 20% by weight, relative to solids.

**2.** Process for the preparation of aqueous solutions or dispersions according to Claim 1 by reaction of
a) organic polyisocyanates, if desired with the additional use of organic monoisocyanates, with
b) compounds having groups which are reactive towards isocyanate groups, if desired with the additional use or in the presence of
c) further auxiliaries and additives,
wherein the formative components b) additionally include formative components having ternary or quaternary ammonium groups or groups which can be converted into such groups, the groups which can be converted into salt groups of the type mentioned being converted at least in part during or following the polyaddition reaction, and, if desired, with the additional use of formative components a) and/or b) having ethylene oxide units present within a polyether chain, the total amount of such hydrophilic formative components being such that a solubility-or dispersibility-ensuring amount of ternary or quaternary ammonium groups of 200 to 300 milli-equivalents per 100 g of solids and, if desired, of ethylene oxide units of the type mentioned of 0 to 25% by weight is present in the polyisocyanate addition product, and conversion of the polyisocyanate addition product thus prepared into an aqueous solution or dispersion during or following the addition reaction, characterised in that the formative components a) and/or b) comprise at least in part acylurea groups of the formula

$$-NH-CO-N-CO-R,$$

the amount of which is determined in such a way that the polyisocyanate addition product contains 0.1 to 20% by weight, relative to solids, of structural units of the formula

$$-NH-CO-N-CO-$$

as constituent part of the aforementioned acylurea groups.

**Revendications**

**1.** Solutions ou dispersions aqueuses de produits d'addition de polyisocyanates qui présentent une teneur favorisant leur solubilité ou dispersibilité dans l'eau en groupes ammonium ternaires ou quaternaires incorporés ainsi éventuellement qu'en motifs oxyde d'éthylène $-CH_2CH_2-O-$ incorporés présents dans une chaîne de polyéther, la teneur en groupes ammonium ternaires ou quaternaires étant d'environ 2 à 200 méq./100 g de matière solide et la teneur en motifs oxyde d'éthylène cités étant d'environ 0 à 25 % en poids par rapport à la matière solide, caractérisés en ce que les produits d'addition de polyisocyanates présentent des segments incorporés dans la chaîne polymère de formule générale :

$$-NH-CO-\underset{|}{N}-CO-R$$

dans laquelle

R représente un reste d'hydrocarbure aliphatique saturé ou insaturé jusqu'en $C_{35}$, un reste d'hydrocarbure aromatique en $C_6$-$C_{10}$ ou un reste d'hydrocarbure araliphatique en $C_7$-$C_{10}$, ou bien

R représente un groupe chlorométhyle, un groupe cyclohexyle, un groupe para-N,N-diméthylphényle, un groupe ester carboxylique, un groupe amide carboxylique, un groupe ester méthylènecarboxylique, un groupe amide méthylènecarboxylique, un groupe ester éthylènecarboxylique, un groupe amide éthylènecarboxylique, un groupe ester cis- ou trans-vinylidènecarboxylique, un groupe amide cis- ou trans-vinylidènecarboxylique, un groupe ester orthobenzoïque, un groupe amide orthobenzoïque ou un reste de formule :

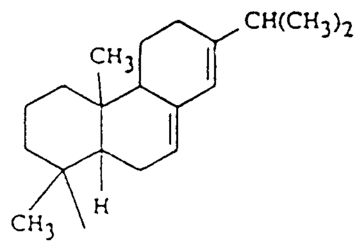

les groupes esters et amides cités ci-dessus étant dérivés d'alcools ou d'amines monovalents,

ou bien, lorsqu'il y a plusieurs restes R dans la même molécule, elle peut contenir en même temps plusieurs restes R différents correspondant à la définition mentionnée,

la quantité totale des motifs de structure incorporés de formule ci-dessus correspondant à une teneur du produit d'addition de polyisocyanates en groupes urées acylés de formule

$$-NH-CO-\underset{|}{N}-CO-$$

de 0,1 à 20 % en poids, par rapport à la matière solide.

**2.** Procédé pour la fabrication de solutions ou dispersions aqueuses selon la revendication 1 par réaction :

a) de polyisocyanates organiques, éventuellement avec utilisation conjointe de monoisocyanates organiques avec

b) de composés à groupes réactifs vis-à-vis des groupes isocyanates éventuellement avec utilisation conjointe ou en présence

c) d'autres agents auxiliaires et additifs,

dans lequel on utilise en même temps comme constituants b) des constituants ayant des groupes ammonium ternaires ou quaternaires ou transformables en ces groupes, dans lequel la transformation au moins partielle des groupes transformables en groupes salins du type cité s'effectue pendant ou à la suite de la réaction de polyaddition et éventuellement avec utilisation simultanée de constituants a)

et/ou b), qui présentent des motifs oxyde d'éthylène présents dans une chaîne polyéther, dans lequel la quantité totale des constituants hydrophiles de ce type est mesurée de telle sorte qu'il y ait dans le produit d'addition de polyisocyanate une quantité en groupes ammonium ternaires ou quaternaire favorisant la solubilité ou dispersibilité de 2 à 300 méq./100 g de matière solide et éventuellement une teneur en motifs oxyde d'éthylène du type cité de 0 à 25 % en poids, et transformation du produit d'addition de polyisocyanate ainsi préparé en une solution ou dispersion aqueuse pendant ou à la suite de la réaction d'addition, caractérisé en ce que l'on utilise (simultanément) comme constituants a) et/ou b) des constituants présentant au moins en partie des groupes acylurées de formule :

$$-NH-CO-\underset{|}{N}-CO-R$$

dont la quantité est mesurée de telle sorte qu'il y ait dans le produit d'addition de polyisocyanate de 0,1 à 20 % en poids, par rapport à la matière solide, en motifs de structure de formule :

$$-NH-CO-\underset{|}{N}-CO-$$

formant une partie des groupes acylurées cités.